# EUROPEAN PATENT APPLICATION

(11) **EP 4 527 223 A1**
(43) Date of publication of application: **26.03.2025**
(21) Application number: 22943684.5
(22) Date of filing: 24.05.2022
(51) Int. Cl.: A24F 40/57, A24F 40/60, A24F 40/80

(54) **INFORMATION PROCESSING DEVICE, AND INFORMATION PROCESSING METHOD**

(71) Applicant: Japan Tobacco Inc., Tokyo 105-6927 (JP)
(72) Inventor: YAMADA, Manabu, Tokyo 130-8603 (JP)
(74) Representative: Hoffmann Eitle
(86) International application number: PCT/JP2022/021259
(87) International publication number: WO 2023/228279

(57) **Abstract**

[Problem] To provide a customization system with which a user can easily achieve their desired smoke flavor.

[Solution] An information processing device comprising a control unit that controls a customization process including setting a parameter relating to the temperature to which an aerosol source is heated or accepting setting of an evaluation for an aerosol generated on the basis of control information reflecting the set parameter, the control unit generating a display image for displaying a mark that indicates the parameter set in the customization process in a prior instance and a mark that indicates the parameter set in the customization process in a current instance, and/or displaying and a mark that indicates the evaluation set in the customization process in the prior instance and a mark that indicates the evaluation set in the customization process in the current instance.

## Description

### Technical Field

The present invention relates to an information processing device and an information processing method.

### Background Art

Inhaler devices that generate a substance to be inhaled by users, such as electronic cigarettes and nebulizers, are widely used. An inhaler device generates an aerosol with a flavor component, for example, using a substrate including an aerosol source for generating an aerosol and a flavor source for imparting a flavor component to the generated aerosol. A user can taste a flavor by inhaling the aerosol with the flavor component generated by the inhaler device. Inhalation of an aerosol by the user will be referred to as a "puff" or a "puff action" hereinafter.

Heating temperature of an aerosol source is known to greatly affect a flavor (also referred to as a smoke taste hereinafter) tasted by the user when the user puffs. For this reason, the following Patent Literature 1, for example, discloses a technique for appropriately controlling supply of power to a heater that heats an aerosol source.

### Citation List

### Patent Literature

Patent Literature 1: JP 6125008 B2

### Summary of Invention

### Technical Problem

A preference for the smoke taste differs between users. Heating temperature of an aerosol source, therefore, is preferably customizable by each user.

The present invention, therefore, has been conceived in view of the above problem, and aims to provide a mechanism capable of easily achieving smoke tastes desired by a user.

### Solution to Problem

In order to solve the above problem, an aspect of the present invention provides an information processing device including a controller that controls a customization process including generating a display image showing symbols indicating a parameter relating to heating temperature of an aerosol source, the parameter being included in control information that specifies the parameter, and symbols indicating evaluations of an aerosol generated by an inhaler device by heating an aerosol source on a basis of the control information and controlling a display device in such a way as to display the generated display image, and receiving setting of the parameter or setting of the evaluations of the aerosol generated on the basis of the control information that reflects the set parameter. The controller generates the display image showing at least symbols indicating the parameter set in a previous customization process and symbols indicating the parameter set in a current customization process or symbols indicating the evaluations set in the previous customization process and symbols indicating the evaluations set in the current customization process.

The controller may generate the display image showing the symbols indicating the parameter set in the previous customization process and the symbols indicating the parameter set in the current customization process in different modes or showing the symbols indicating the evaluations set in the previous customization process and the symbols indicating the evaluations set in the current customization process in different modes.

The controller may display the symbols indicating the parameter or the symbols indicating the evaluations set in the previous customization process with a higher level of transparency than for the symbols indicating the parameter or the symbols indicating the evaluations set in the current customization process.

The controller may receive setting of the parameter or setting of the evaluations for each of a plurality of puff times.

The controller may generate the display image showing the symbol indicating the parameter set in the previous customization process and the symbol indicating the parameter set in the current customization process for a first puff time or showing the symbols indicating the evaluations set in the previous customization process and the symbols indicating the evaluations set in the current customization process for a second puff time.

The controller may generate the display image showing, for a puff time for which the evaluations have been set in the current customization process, the evaluations set in the current customization process and, for a puff time for which the evaluations have not been set in the current customization process, the evaluations set in the previous customization process.

The display image may show the symbols indicating the set evaluations and a first UI element for setting the evaluation for a same evaluation item as an evaluation item corresponding to the symbols indicating the evaluations aligned in a predetermined direction.

The display image may show the symbols indicating the evaluations and the symbols indicating the parameter set for a subset of all puff times.

The display image may include a plurality of second UI elements corresponding to a plurality of puff times and a predetermined area. The controller may arrange the plurality of second UI elements corresponding to the plurality of puff times in a predetermined direction, scroll the plurality of second UI elements in the predetermined direction, and receive, when each of the scrolled second UI elements reaches the predetermined area, setting of the evaluations for the puff time corresponding to the second UI element that has reached the predetermined area.

The display image may include a plurality of second UI elements corresponding to a plurality of puff times and a plurality of evaluation items. The controller may arrange the plurality of second UI elements corresponding to the plurality of puff times in a predetermined direction, scroll the plurality of second UI elements in the predetermined direction, and receive, when each of the scrolled second UI elements reaches the predetermined area, setting of the evaluation for the puff time and the evaluation item corresponding to the second UI element that has reached the predetermined area. A plurality of second UI elements corresponding to a same puff time and different evaluation items may reach the predetermined area at different times.

The second UI elements may include the symbols indicating the set evaluations.

The display image may include a third UI element. The controller may set the parameter in accordance with positions of the symbols indicating the parameter shown in the display image and, when the third UI element is selected, enlarge a movable range of the symbols indicating the parameter.

The controller may control an output device in such a way as to output first information each time a puff time comes.

When all the set evaluations satisfy a predetermined condition, the controller may control an output device in such a way as to output second information.

In addition, in order to solve the above problem, another aspect of the present invention provides an information processing method including controlling a customization process including generating a display image showing a parameter relating to heating temperature of an aerosol source, the parameter being included in control information that specifies the parameter, and evaluations of an aerosol generated by an inhaler device by heating an aerosol source on a basis of the control information and controlling a display device in such a way as to display the generated display image, and receiving setting of the parameter or setting of the evaluations of the aerosol generated on the basis of the control information that reflects the set parameter. The controlling the customization process includes generating the display image showing at least symbols indicating the parameter set in a previous customization process and symbols indicating the parameter set in a current customization process or symbols indicating the evaluations set in the previous customization process and symbols indicating the evaluations set in the current customization process.

### Advantageous Effects of Invention

As described above, according to the present invention, a customization mechanism capable of easily achieving smoke tastes desired by a user is provided.

### Brief Description of Drawings

[Fig. 1] Fig. 1 is a diagram for describing a configuration example of a system according to an embodiment.
[Fig. 2] Fig. 2 is a schematic diagram schematically illustrating a configuration example of an inhaler device according to the present embodiment.
[Fig. 3] Fig. 3 is a block diagram illustrating a configuration example of a terminal device according to the present embodiment.
[Fig. 4] Fig. 4 is a graph schematically illustrating an example of a heating profile.
[Fig. 5] Fig. 5 is a diagram illustrating an example of an evaluation screen displayed in an N-th customization process.
[Fig. 6] Fig. 6 is a diagram illustrating an example of a design screen displayed in the N-th customization process.
[Fig. 7] Fig. 7 is a diagram illustrating a display example at a time when a display previous temperatures button is pressed in a temperature setting screen illustrated in Fig. 6.
[Fig. 8] Fig. 8 is a flowchart illustrating an example of a process for setting evaluations in the N-th customization process performed by the terminal device according to the present embodiment.
[Fig. 9] Fig. 9 is a flowchart illustrating an example of a procedure of a process for setting target temperatures performed by the terminal device according to the present embodiment.
[Fig. 10] Fig. 10 is a diagram illustrating another example of the evaluation screen displayed in the N-th customization process.
[Fig. 11] Fig. 11 is a diagram illustrating another example of the evaluation screen displayed in the N-th customization process.
[Fig. 12] Fig. 12 is a diagram illustrating another example of the evaluation screen displayed in the N-th customization process.
[Fig. 13] Fig. 13 is a diagram illustrating another example of the evaluation screen displayed in the N-th customization process.
[Fig. 14] Fig. 14 is a diagram illustrating another example of the evaluation screen displayed in the N-th customization process.
[Fig. 15] Fig. 15 is a diagram illustrating another example of the evaluation screen displayed in the N-th customization process.
[Fig. 16] Fig. 16 is a diagram illustrating another example of the evaluation screen displayed in the N-th customization process.

### Description of Embodiments

A preferred embodiment of the present invention will be described in detail hereinafter with reference to the accompanying drawings. Structural elements having substantially the same functional configuration will be given the same reference numerals herein and in the drawings, and redundant description thereof is omitted.

### <1. Configuration example>

### (1) System configuration example

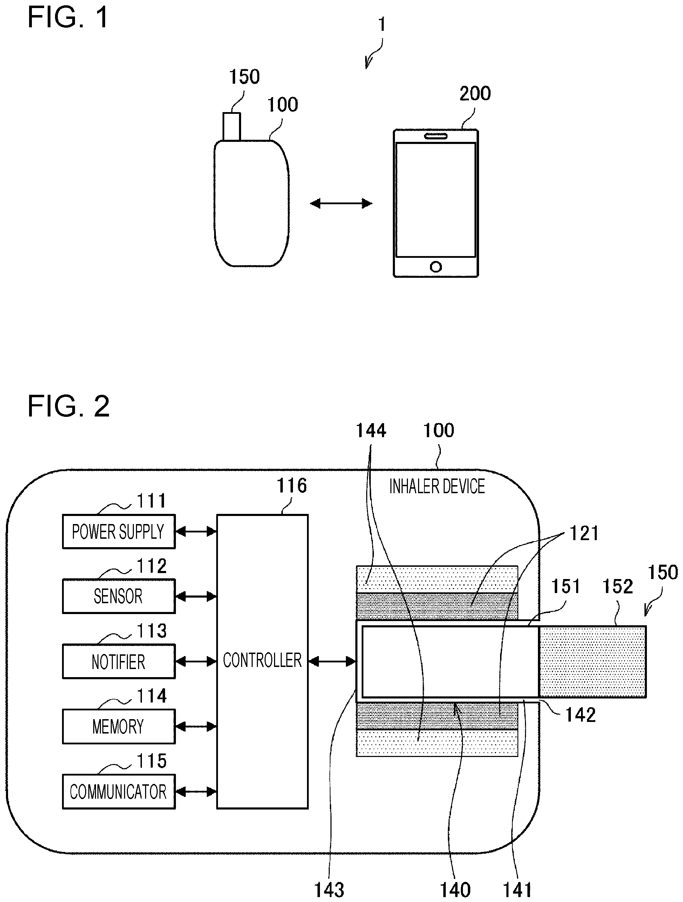

Fig. 1 is a diagram for describing a configuration example of a system 1 according to an embodiment. As illustrated in Fig. 1, the system 1 includes an inhaler device 100 and a terminal device 200.

The inhaler device 100 is a device that generates a substance to be inhaled by a user. It is assumed in the following description that the substance generated by the inhaler device 100 is an aerosol. Alternatively, the substance generated by the inhaler device may be a gas. The inhaler device 100 generates the aerosol using a stick substrate 150. The stick substrate 150 is an example of a substrate including an aerosol source. The inhaler device 100 is an example of an aerosol generation device that generates an aerosol by heating an aerosol source included in a substrate.

The terminal device 200 is an information processing device that performs various types of information processing relating to the inhaler device 100. The user of the inhaler device 100 uses the terminal device 200. The terminal device 200 may be any device such as a smartphone, a tablet terminal, a wearable device, or a personal computer (PC). Alternatively, the terminal device 200 may be a charger for charging the inhaler device 100.

The terminal device 200 is used to change settings of the inhaler device 100. For example, the terminal device 200 receives a user operation for changing the settings of the inhaler device 100 and changes the settings of the inhaler device 100.

### (2) Configuration example of inhaler device

Fig. 2 is a schematic diagram schematically illustrating a configuration example of the inhaler device 100 according to the present embodiment. As illustrated in Fig. 2, the inhaler device 100 includes a power supply 111, a sensor 112, a notifier 113, a memory 114, a communicator 115, a controller 116, a heater 121, a container 140, and a heat insulator 144.

The power supply 111 stores electric power. The power supply 111 supplies electric power to the structural elements of the inhaler device 100 under the control of the controller 116. The power supply 111 may be a rechargeable battery such as a lithium ion secondary battery.

The sensor 112 acquires various items of information regarding the inhaler device 100. In an example, the sensor 112 may be a pressure sensor such as a condenser microphone, a flow sensor, or a temperature sensor, and acquire a value generated in accordance with the user's inhalation. In another example, the sensor 112 may be an input device that receives information input by the user, such as a button or a switch.

The notifier 113 provides information for the user. The notifier 113 may be a light-emitting device that emits light, a display device that displays an image, a sound output device that outputs sound, or a vibration device that vibrates.

The memory 114 stores various items of information for operation of the inhaler device 100. The memory 114 may be a non-volatile storage medium such as flash memory.

The communicator 115 is a communication interface capable of communication in conformity with any wired or wireless communication standard. Such a communication standard may be, for example, Wi-Fi (registered trademark), Bluetooth (registered trademark), near-field communication (NFC), or a standard using a low-power wide-area network (LPWA).

The controller 116 functions as an arithmetic processing unit and a control circuit, and controls the overall operations of the inhaler device 100 in accordance with various programs. The controller 116 is achieved by an electronic circuit such as a central processing unit (CPU) or a microprocessor, for example.

The container 140 has an internal space 141, and holds the stick substrate 150 in a manner partially accommodated in the internal space 141. The container 140 has an opening 142 that allows the internal space 141 to communicate with outside. The container 140 accommodates the stick substrate 150 that is inserted into the internal space 141 through the opening 142. For example, the container 140 may be a tubular body having the opening 142 and a bottom 143 on its ends, and may define the pillar-shaped internal space 141. The container 140 connects with an airflow path that supplies air to the internal space 141. For example, a side surface of the inhaler device 100 has an air inlet hole that is an inlet of air into the airflow path. For example, the bottom 143 has an air outlet hole that is an outlet of the air from the airflow path to the internal space 141.

The stick substrate 150 includes a substrate 151 and an inhalation port 152. The substrate 151 includes an aerosol source. For example, the aerosol source may be a liquid such as polyhydric alcohol or water. Examples of the polyhydric alcohol include glycerine and propylene glycol. The aerosol source may include the flavor component that is either derived from tobacco or not derived from tobacco. For the inhaler device 100 that is a medical inhaler such as a nebulizer, the aerosol source may include a medicine. In this configuration example, the aerosol source is not limited to a liquid, and may be a solid, instead. The stick substrate 150 held by the container 140 includes the substrate 151 at least partially accommodated in the internal space 141 and the inhalation port 152 at least partially protruding from the opening 142. When the user inhales with the inhalation port 152 protruding from the opening 142 in his/her mouth, air flows into the internal space 141 through the airflow path (not illustrated), and the air and an aerosol generated from the substrate 151 reach inside the mouth of the user.

The heater 121 heats the aerosol source to atomize the aerosol source and generate the aerosol. In the example illustrated in Fig. 2, the heater 121 has a film-like shape and surrounds the outer circumference of the container 140. Subsequently, heat produced from the heater 121 heats the substrate 151 of the stick substrate 150 from the outer circumference, generating the aerosol. The heater 121 produces heat when receiving electric power from the power supply 111. In an example, the electric power may be supplied in response to the sensor 112 detecting a start of the user's inhalation and/or an input of predetermined information. Subsequently, the supply of the electric power may be stopped in response to the sensor 112 detecting an end of the user's inhalation and/or an input of predetermined information.

The heat insulator 144 prevents heat from transferring from the heater 121 to the other structural elements. For example, the heat insulator 144 may be a vacuum heat insulator, an aerogel heat insulator, or the like.

The configuration example of the inhaler device 100 has been described above. It is needless to say that the inhaler device 100 is not limited to the above configuration, and may be configured in various ways as exemplified below.

In an example, the heater 121 may have a blade-like shape, and may be disposed so that the heater 121 protrudes from the bottom 143 of the container 140 toward the internal space 141. In this case, the heater 121 having the blade-like shape is inserted into the substrate 151 of the stick substrate 150 and heats the substrate 151 of the stick substrate 150 from its inside. In another example, the heater 121 may be disposed so that the heater 121 covers the bottom 143 of the container 140. In still another example, the heater 121 may be implemented as a combination of two or more selected from a first heater that covers the outer circumference of the container 140, a second heater having the blade-like shape, and a third heater that covers the bottom 143 of the container 140.

In another example, the container 140 may include an opening/closing mechanism that at least partially opens and closes an outer shell defining the internal space 141. Examples of the opening/closing mechanism include a hinge. In addition, the container 140 may sandwich the stick substrate 150 inserted into the internal space 141 by opening and closing the outer shell. In this case, the heater 121 may be provided at the sandwiching position of the container 140 and produce heat while pressing the stick substrate 150.

In addition, means for atomizing the aerosol source is not limited to the heating by the heater 121. For example, the means for atomizing the aerosol source may be induction heating, instead. In this case, the inhaler device 100 includes at least an electromagnetic induction source, such as a coil, that generates a magnetic field instead of the heater 121. The inhaler device 100 may be provided with a susceptor that produces heat through induction heating, or the stick substrate 150 may include the susceptor.

The inhaler device 100 generates the aerosol to be inhaled by the user by operating in conjunction with the stick substrate 150. A combination of the inhaler device 100 and the stick substrate 150, therefore, may be regarded as an aerosol generation system.

### (3) Configuration example of terminal device

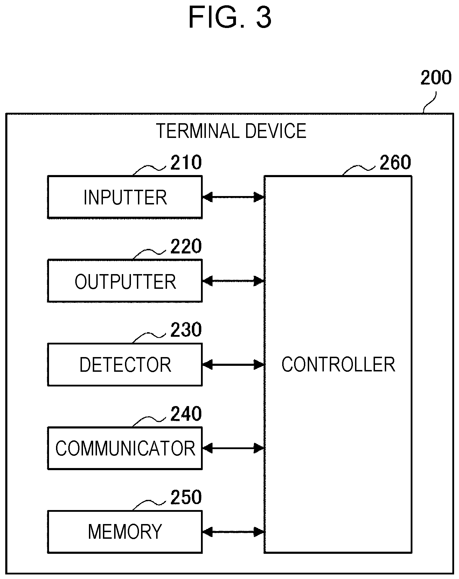

Fig. 3 is a block diagram illustrating a configuration example of the terminal device 200 according to the present embodiment. As illustrated in Fig. 3, the terminal device 200 includes an inputter 210, an outputter 220, a detector 230, a communicator 240, a memory 250, and a controller 260.

The inputter 210 has a function of receiving inputs of various items of information. The inputter 210 may include an input device that receives inputs of information from the user. The input device may be, for example, buttons, a keyboard, a touch panel, a microphone, or the like. The inputter 210 may also include various sensors including an image sensor.

The outputter 220 has a function of outputting information. The outputter 220 may include an output device that outputs information for the user. The output device may be, for example, a display device that displays information, a light-emitting device that emits light, a vibration device that vibrates, a sound output device that outputs sound, or the like. An example of the display device is a display. An example of the light-emitting device is a light-emitting diode (LED). An example of the vibration device is an eccentric motor. An example of the sound output device is a speaker. The outputter 220 provides information for the user by outputting information input from the controller 260.

The detector 230 has a function of detecting information regarding the terminal device 200. The detector 230 may detect positional information regarding the terminal device 200. For example, the detector 230 receives a global navigation satellite system (GNSS) signal from a GNSS satellite (e.g., a global positioning system (GPS) signal from a GPS satellite) and detects positional information regarding a device including latitude and longitude. The detector 230 may detect movement of the terminal device 200. For example, the detector 230 includes a gyro sensor and an acceleration sensor and detects angular velocity and acceleration.

The communicator 240 is a communication interface for communicating information between the terminal device 200 and other devices. The communicator 240 performs communication in conformity with any wired or wireless communication standard. Such a communication standard may be, for example, universal serial bus (USB), Wi-Fi (registered trademark), Bluetooth (registered trademark), near-field communication (NFC), or a standard using a low-power wide-area network (LPWA).

The memory 250 stores various items of information. The memory 250 is achieved, for example, by a nonvolatile storage medium such as a flash memory.

The controller 260 functions as an arithmetic processing unit and a control circuit, and controls the overall operations of the terminal device 200 in accordance with various programs. The controller 260 is achieved by, for example, an electronic circuit such as a central processing unit (CPU) or a microprocessor. The controller 260 may also include a read-only memory (ROM) storing programs to be used, operation parameters, and the like and a random-access memory (RAM) that temporarily stores parameters which change as appropriate and the like. The terminal device 200 performs various types of processing under the control of the controller 260. Examples of the processing controlled by the controller 260 include the processing of information input using the inputter 210, the outputting of information from the outputter 220, the detection of information by the detector 230, the communication of information by the communicator 240, and the storing and the reading of information by the memory 250. The controller 260 also controls other types of processing performed by the terminal device 200 including inputting of information to each structural element, processing based on information output from each structural elements, and the like.

The functions of the controller 260 may be achieved using an application. The application may be preinstalled or downloaded. Alternatively, the functions of the controller 260 may be achieved by progressive web apps (PWAs).

### <2. Technical features>

### (1) Heating profile

The controller 116 controls the operation of the heater 121 on the basis of a heating profile. The control of the operation of the heater 121 is achieved by controlling the supply of power from the power supply 111 to the heater 121. The heater 121 heats the stick substrate 150 using the power supplied from the power supply 111.

The heating profile is control information for controlling heating temperature of the aerosol source. The heating profile defines a parameter relating to the heating temperature of the aerosol source. An example of the heating temperature of the aerosol source is temperature of the heater 121. An example of the parameter relating to the heating temperature of the aerosol source is a target value of the temperature (hereinafter also referred to as a target temperature) of the heater 121. The temperature of the heater 121 may be controlled in such a way as to change in accordance with time elapsed since a start of heating. In this case, the heating profile includes information that defines temporal changes in the target temperature. In another example, the heating profile can include a parameter that defines a method for supplying power to the heater 121 (hereinafter referred to as a power supply parameter). The power supply parameter includes, for example, a voltage applied to the heater 121, on/off of the supply of power to the heater 121, a feedback control method to be employed, or the like. On/off of the supply of power to the heater 121 may be regarded as on/off of the heater 121.

The controller 116 controls the operation of the heater 121 such that the temperature (hereinafter also referred as an actual temperature) of the heater 121 changes in the same manner as the target temperature defined by the heating profile. The heating profile is typically designed in such a way as to optimize the flavor tasted by the user when the user inhales the aerosol generated from the stick substrate 150. By controlling the operation of the heater 121 on the basis of the heating profile, therefore, the flavor tasted by the user can be optimized.

The control of the temperature of the heater 121 can be achieved through, for example, known feedback control. The feedback control may be, for example, a proportional-integral-differential (PID) controller. The controller 116 can supply the power from the power supply 111 to the heater 121 in a form of a pulse based on pulse width modulation (PWM) or pulse frequency modulation (PFM). In this case, the controller 116 can control the temperature of the heater 121 by adjusting a duty ratio of the power pulse or frequency in the feedback control. Alternatively, the controller 116 may perform simple on/off control in the feedback control. For example, the controller 116 may cause the heater 121 to produce heat until the actual temperature reaches the target temperature, stop producing heat when the actual temperature reaches the target temperature, and resume the heating when the actual temperature falls below the target temperature.

The temperature of the heater 121 can be quantified by, for example, measuring or estimating an electrical resistance of the heater 121 (more specifically, a heating resistor included in the heater 121). This is because the electrical resistance of the heating resistor changes in accordance with the temperature. The electrical resistance of the heating resistor can be estimated by measuring a decrease in voltage of the heating resistor. The decrease in the voltage of the heating resistor can be measured by a voltage sensor that measures a potential difference applied to the heating resistor. In another example, the temperature of the heater 121 can be measured by a temperature sensor, such as a thermistor, provided near the heater 121.

A period of time from a start to an end of a process for generating the aerosol using the stick substrate 150 will be referred to as a heating session hereinafter. In other words, the heating session is a period of time in which the supply of power to the heater 121 is controlled on the basis of the heating profile. The start of the heating session is a time when heating based on the heating profile starts. The end of the heating session is a time when a sufficient amount of aerosol is no longer generated. The heating session includes a preheating period in a first half and a puffable period in a second half. The puffable period is a period when a sufficient amount of aerosol is assumed to be generated. The preheating period is a period from a start of heating until the puffable period starts. Heating performed in the preheating period will also be referred to as preheating.

The notifier 113 may provide, for the user, information indicating a time when the preheating will end. For example, the notifier 113 provides information indicating an end of the preheating before the preheating ends and provides information indicating that the preheating has ended when the preheating has ended. The provision of information for the user can be performed, for example, through lighting of the LED, vibration, or the like. The user can puff immediately after the end of the preheating on the basis of the provision of information.

Similarly, the notifier 113 may provide, for the user, information indicating a time when the puffable period will end. For example, the notifier 113 provides information indicating an end of the puffable period before the puffable period ends and provides information indicating that the puffable period has ended when the puffable period has ended. The provision of information for the user can be performed, for example, through lighting of the LED, vibration, or the like. The user can puff until the puffable period ends on the basis of the provision of information.

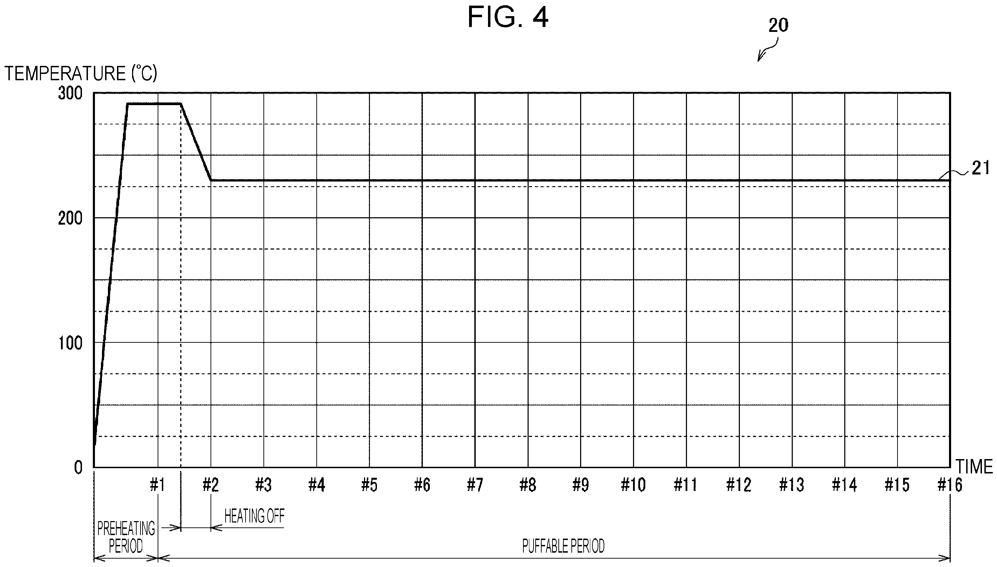

An example of the heating profile will be described with reference to Fig. 4. Fig. 4 is a graph schematically illustrating an example of the heating profile. A horizontal axis of a graph 20 represents time. A vertical axis of the graph 20 represents temperature. A line 21 indicates temporal changes in the target temperature. As illustrated in Fig. 4, the target temperature sharply increases to around 300°C after a start of heating, decreases to around 230°C, and is maintained around 230°C until an end of the heating. In a period when the temperature decreases, the supply of power to the heater 121 is stopped, and the heating is turned off. Times at which first to sixteenth puffs are performed (hereinafter referred to as puff times) are indicated as #1 to #16 along the horizontal axis. The puff times may be set in advance. In the example illustrated in Fig. 4, a period of time until the first puff time is the preheating period, and the sixteen puff times are set in the subsequent puffable period.

### (2) Customization of heating profile

The terminal device 200 (e.g., the controller 260) controls a customization process. The customization process is a process for customizing (e.g., changing) a heating profile to be used by the inhaler device 100. The user repeats the customization of a heating profile and checking of a smoke taste based on the customized heating profile. The terminal device 200 repeatedly performs the customization process until a heating profile for achieving a smoke taste desired by the user is generated. By repeating the customization process, the terminal device 200 can gradually brings the heating profile closer to an ideal heating profile for achieving the smoke taste desired by the user.

The customization process includes reception, by the terminal device 200, of setting of target temperatures performed by the user. In particular, the terminal device 200 receives setting of a target temperature for each puff time. The terminal device 200 generates a new heating profile by changing target temperatures in a current heating profile on the basis of setting performed by the user.

The customization process includes reception, by the terminal device 200, of setting of evaluations of smoke tastes performed by the user. In particular, the terminal device 200 receives setting of evaluations of an aerosol generated on the basis of a heating profile that reflects the target temperatures set by the user. As a result, the user can evaluate how his/her customization has affected the smoke tastes.

It is assumed hereinafter that the terminal device 200 receives setting of evaluations of smoke tastes performed by the user during a heating session, that is, while the inhaler device 100 is performing heating based on the heating profile. In this case, the user puffs each time a puff time comes, and sets evaluations of a smoke taste using the terminal device 200. During the customization process, the terminal device 200 may output, each time a puff time comes, information (corresponds to first information) indicating that the puff time has come. For example, the terminal device 200 may vibrate each time a puff time comes. With this configuration, the user can puff using the vibration as a trigger, and set evaluations of a smoke taste using the terminal device 200. The terminal device 200 may cause the inhaler device 100 to output the information indicating that a puff time has come, instead.

The reception of setting of target temperatures and the reception of setting of evaluations may be performed in any order in the customization process. As an example, first, the terminal device 200 receives setting of evaluations of an aerosol generated on the basis of a heating profile generated in a previous customization process and then receives setting of target temperatures in the following description.

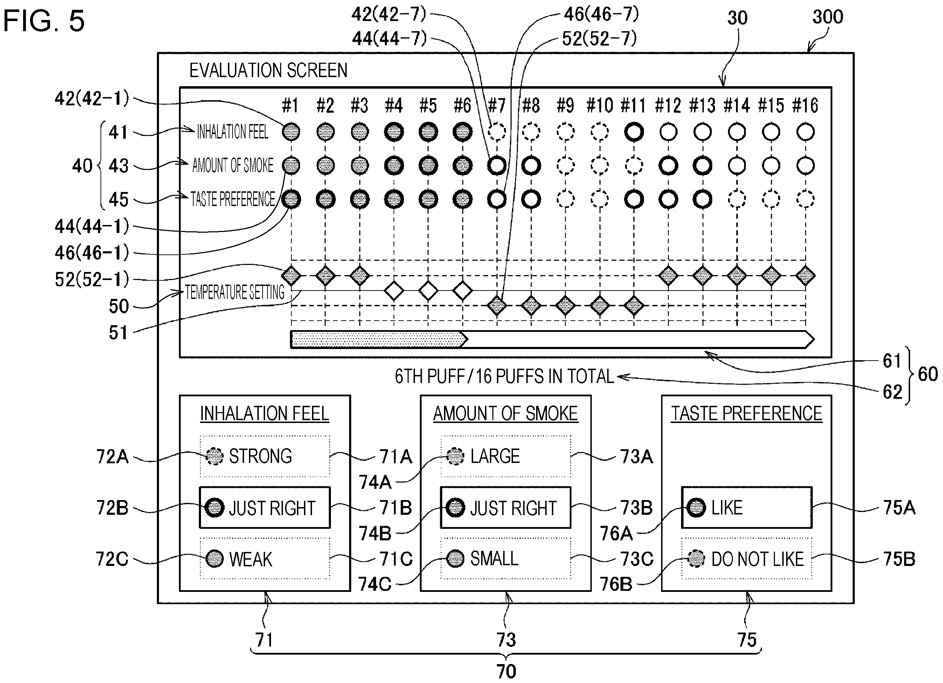

The customization process includes generation, by the terminal device 200, of a display image for customizing a heating profile and display of the generated display image. The display image for customizing a heating profile shows symbols indicating target temperatures included in the heating profile and symbols indicating evaluations of an aerosol generated by the inhaler device 100 by heating the stick substrate 150 on the basis of the heating profile. The user sets target temperatures or evaluations on the basis of the display image for customizing a heating profile. The display image for customizing a heating profile may be an evaluation screen for setting evaluations of smoke tastes and a design screen for setting target temperatures. The terminal device 200 may display these screens on a touch panel that serves as both the inputter 210 and the outputter 220. In this case, the user can set, in the terminal device 200, a desired target temperature or a desired evaluation by, for example, touching one of various user interface (UI) elements included in the displayed screens. Examples of the evaluation screen and the design screen will be described hereinafter with reference to Figs. 5 to 7.

### - Evaluation screen

Fig. 5 is a diagram illustrating an example of the evaluation screen displayed in an N-th customization process. N is an integer larger than or equal to 2. The terminal device 200 receives, with an evaluation screen 300 displayed in the N-th (i.e., current) customization process, setting of evaluations of an aerosol generated on the basis of a heating profile generated in an (N - 1)th (i.e., previous) customization process.

As illustrated in Fig. 5, the evaluation screen 300 includes a design information display field 30, a progress display field 60, and an evaluation setting field 70. The evaluation screen 300 illustrated in Fig. 5 is displayed when the sixth of the total of sixteen puff times comes, that is, when evaluations of a smoke taste at the sixth puff time are to be set. The user can set the evaluations of the smoke taste in the sixth puff on the evaluation screen 300.

The design information display field 30 is a field for displaying information for designing a heating profile. More specifically, the design information display field 30 shows the symbols indicating evaluations of smoke tastes and the symbols indicating target temperatures. #1 to #16 arranged in an upper part of the design information display field 30 from the left to the right indicate the first to sixteenth puff times. Circle icons 42, 44, and 46, which are symbols indicating evaluations of a smoke taste at each puff time, and a diamond icon 52, which is a symbol indicating a target temperature, are displayed on a vertical axis extending from each of #1 to #16. The design information display field 30 includes an evaluation display field 40 and a temperature display field 50.

The evaluation display field 40 is a field for displaying evaluations of a smoke taste set for each puff time. The evaluation display field 40 includes an evaluation display field 41 for an inhalation feel, an evaluation display field 43 for the amount of smoke, and an evaluation display field 45 for a taste preference. The evaluation display field 41 for the inhalation feel includes icons 42 indicating evaluations for the inhalation feel. The evaluation display field 43 for the amount of smoke includes icons 44 indicating evaluations for the amount of smoke. The evaluation display field 45 for the taste preference includes icons 46 indicating evaluations for the taste preference. Among these icons 42, 44, and 46, icons indicating evaluations of a smoke taste set for each puff time might be identified by adding a number indicating the number of puff times to ends of reference numerals. For example, icons 42-1, 44-1, and 46-1 indicate evaluations for the inhalation feel, the amount of smoke, and the taste preference set for the first puff time. Display of evaluations with the icons 42, 44, and 46 in the evaluation display field 40 will be described in detail later.

The temperature display field 50 is a field for displaying the target temperature at each puff time. In the temperature display field 50, target temperatures are indicated on the basis of positional relationships between a reference line 51 and the icons 52, which are symbols indicating the target temperatures. Among the icons 52, an icon indicating the target temperature at each puff time might be identified by giving a number indicating the number of puff times to an end of a reference numeral. For example, an icon 52-1 indicates a target temperature at the first puff time.

The reference line 51 corresponds to a default temperature (hereinafter also referred to as a reference temperature). Gradations higher than the reference line 51 indicate temperatures higher than the reference temperature, and gradations lower than the reference line 51 indicate temperatures lower than the reference temperature. In an example, a gradation immediately above the reference line 51 may correspond to a temperature 15°C higher than the reference temperature, and a gradation further above the reference line 51 may correspond to a temperature 30°C higher than the reference temperature. In addition, a gradation immediately below the reference line 51 may correspond to a temperature 15°C lower than the reference temperature, and a gradation further below the reference line 51 may correspond to a temperature 30°C lower than the reference temperature. In the example illustrated in Fig. 5, the target temperature at the first puff time indicated by an icon 52-1 is the temperature 15°C higher than the reference temperature. A target temperature at the seventh puff time indicated by an icon 52-7 is the temperature 15°C lower than the reference temperature. The reference temperature may be common to all the puff times, or may be different between the puff times.

The progress display field 60 is a field for displaying a progress state of a heating session. The progress display field 60 includes a bar display field 61 and a fraction display field 62. The bar display field 61 is a field for displaying a rate of progress of the heating session in the form of a progress bar. Total length of the bar display field 61 corresponds to a puffable period, and the bar extends from the left to the right as time elapses. The progress of the heating session is indicated on the basis of a relationship between a position of a right end of the extending bar in the bar display field 61 and the vertical axes extending from the numbers #1 to #16 indicating the puff times and displayed in the design information display field 30. In the example illustrated in Fig. 5, the right end of the bar in the bar display field 61 has reached the vertical axis extending from #6, which means that the heating session has progressed to the sixth puff time. The fraction display field 62 is a field for displaying the rate of progress of the heating session in the form of a fraction. In the example illustrated in Fig. 5, the fraction display field 62 indicates that the sixth of the total of sixteen puff times has come.

When heating starts, the inhaler device 100 may transmit, to the terminal device 200, information indicating the start of the heating. The terminal device 200 may then determine the progress of a heating session and arrival of a puff time in accordance with time elapsed since reception of the information indicating the start of the heating from the inhaler device 100. In a heating profile, a time when each of a plurality of puff times comes can be specified as time elapsed since a start of heating.

The evaluation setting field 70 is a field for receiving setting of evaluations of a smoke taste. As illustrated in Fig. 5, the evaluation setting field 70 includes an evaluation setting field 71 for the inhalation feel, an evaluation setting field 73 for the amount of smoke, and an evaluation setting field 75 for the taste preference. The terminal device 200 receives setting of evaluations relating to the three evaluation items, namely the inhalation feel, the amount of smoke, and the taste preference, on the basis of user operations performed in the evaluation setting field 70.

The evaluation setting field 71 for the inhalation feel includes buttons 71A to 71C, which are first UI elements for setting an evaluation for the inhalation feel. The terminal device 200 receives setting of evaluations of a strong inhalation feel, a just right inhalation feel, and a weak inhalation feel when the buttons 71A, 71B, and 71C are selected, respectively. An icon 72A indicating a strong inhalation feel, an icon 72B indicating a just right inhalation feel, and an icon 72C indicating a weak inhalation feel are given to the buttons 71A, 71B, and 71C, respectively.

The evaluation setting field 73 for the amount of smoke includes buttons 73A to 73C, which are first UI elements for setting an evaluation for the amount of smoke. The terminal device 200 receives setting of evaluations of a large amount of smoke, a just right amount of smoke, and a small amount of smoke when the buttons 73A, 73B, and 73C are selected, respectively. An icon 74A indicating a large amount of smoke, an icon 74B indicating a just right amount of smoke, and an icon 74C indicating a small amount of smoke are given to the buttons 73A, 73B, and 73C, respectively.

The evaluation setting field 75 for the taste preference includes buttons 75A and 75B, which are first UI elements for setting an evaluation for the taste preference. The terminal device 200 receives setting of evaluations of a taste that the user likes and a taste that the user does not like when the button 75A and 75B are selected, respectively. An icon 76A indicating a taste that the user likes and an icon 76B indicating a taste that the user does not like are given to the buttons 75A and 75B, respectively.

The terminal device 200 receives setting of evaluations of a smoke taste at each of the plurality of puff times. For example, each time a puff time comes, the terminal device 200 receives evaluations for a smoke taste at the puff time that has come. In the example illustrated in Fig. 5, the buttons 71B, 73B, and 75A have been selected as the evaluations of the smoke taste at the sixth puff time. That is, the user has set evaluations indicating a just right inhalation feel, a just right amount of smoke, and a taste that the user likes. As illustrated in Fig. 5, the buttons 71B, 73B, and 75A selected by the user can be displayed in a mode different from a mode for other buttons, that is, for example, highlighted more clearly than other buttons.

Modes of the icons 72 (72A to 72C), 74 (74A to 74C), and 76 (76A and 76B) displayed in the evaluation setting field 70 correspond to those of the icons 42, 44, and 46 displayed in the evaluation display field 40. More specifically, as the icons 72 and the icons 42 corresponding to the evaluations indicating a strong inhalation feel, a just right inhalation feel, and a weak inhalation feel, a broken-line circle, a thick-line circle, and a thin-line circle are displayed, respectively. In addition, as the icons 74 and the icons 44 corresponding to the evaluations indicating a large amount of smoke, a just right amount of smoke, and a small amount of smoke, a broken-line circle, a thick-line circle, and a thin-line circle are displayed, respectively. As the icons 76 and the icons 46 corresponding to the evaluations indicating a taste that the user likes and a taste that the user does not like, a thick-line circle and a broken-line circle are displayed, respectively. At the first puff time (#1) in the example illustrated in Fig. 5, the icon 42-1 is a thin-line circle as with the icon 72C, the icon 44-1 is a thin-line circle as with the icon 74C, and the icon 46-1 is a thick-line circle as with the icon 76A. That is, the example illustrated in Fig. 5 indicates that, at the first puff time (#1), evaluations indicating a weak inhalation feel, a small amount of smoke, and a taste that the user likes have been set.

Here, the terminal device 200 can display the icons 42, 44, and 46 indicating evaluations set in the (N - 1)th customization process and the icons 42, 44, and 46 indicating evaluations set in the N-th customization process. In the (N - 1)th customization process, evaluations are set first, and then target temperatures are changed. Evaluations are then set in the N-th customization process. As a result, with this configuration, the user can easily understand how evaluations of smoke tastes have changed as a result of the changes to the target temperatures in the (N - 1)th customization process.

In particular, for a puff time at which evaluations of a smoke taste have been set in the N-th customization process, the terminal device 200 displays the icons 42, 44, and 46 indicating the evaluations of the smoke taste set in the N-th customization process. For a puff time at which evaluations of a smoke taste have not been set in the N-th customization process, on the other hand, the terminal device 200 displays the icons 42, 44, and 46 indicating evaluations of a smoke taste set in the (N - 1)th customization process. In the example illustrated in Fig. 5, smoke tastes have been set up to the sixth puff time in the N-th customization process. In the evaluation display field 40, therefore, the icons 42, 44, and 46 (e.g., 42-1, 44-1, and 46-1) indicating the evaluations set in the N-th customization process are displayed up to the sixth puff time. For seventh and subsequent puff times, on the other hand, the icons 42, 44, and 46 (e.g., 42-7, 44-7, and 46-7) indicating evaluations set in the (N - 1)th customization process are displayed in the evaluation display field 40. With this configuration, the user can easily view how the evaluations are changed as the heating session progresses.

Here, the terminal device 200 may display the icons 42, 44, and 46 indicating the evaluations set in the (N - 1)th customization process and the icons 42, 44, and 46 indicating the evaluations set in the N-th customization process in different modes. In the example illustrated in Fig. 5, the icons 42, 44, and 46 (e.g., 42-7, 44-7, and 46-7) indicating the evaluations of smoke tastes at the seventh to sixteenth puff times set in the (N - 1)th customization process are displayed as colorless circles. The icons 42, 44, and 46 (e.g., 42-1, 44-1, and 46-1) indicating the evaluations of the smoke tastes at the first to sixth puff times set in the N-th customization process, on the other hand, are displayed as colored circles. With this configuration, the user can easily distinguish between the evaluations of the smoke tastes set in the N-th customization process and the evaluations of the smoke tastes set in the (N - 1)th customization process.

As another example of the display in different modes, a difference in color, a difference in color density, a difference in a degree of transparency, a difference in a contour line, or the like may be employed instead of presence or absence of color in Fig. 5. In particular, the terminal device 200 desirably displays the icons 42, 44, and 46 indicating the evaluations set in the (N - 1)th customization process with a higher level of transparency than for the icons 42, 44, and 46 indicating the evaluations set in the N-th customization process. For example, it is desirable to display the icons 42, 44, and 46 indicating the evaluations set in the (N - 1)th customization process translucently and the icons 42, 44, and 46 indicating the evaluations set in the N-th custization process opaquely. With this configuration, the user can more easily distinguish between the evaluations set in the N-th customization process and the evaluations set in the (N - 1)th customization process.

If all of set evaluations of smoke tastes satisfy a predetermined condition, the terminal device 200 may output information (corresponds to second information) indicating that an optimal heating profile has been generated. An example of the predetermined condition is positive evaluations. If the inhalation feel is just right, the amount of smoke is just right, and the taste is one that the user likes at every puff time, for example, the terminal device 200 may vibrate in a predetermined pattern. With this configuration, the user can be notified that the customization of a heating profile has been successfully completed.

### - Design screen

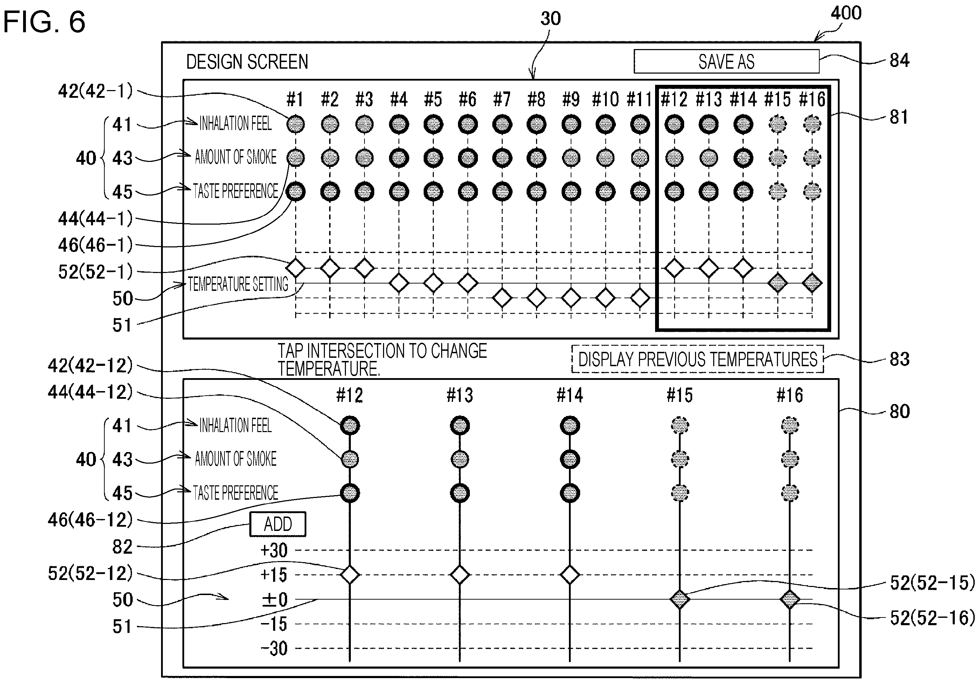

Fig. 6 is a diagram illustrating an example of the design screen displayed in the N-th customization process. The terminal device 200 displays a design screen 400 after the setting of the evaluations of the smoke tastes is completed on the evaluation screen 300. The terminal device 200 then receives, on the design screen 400, setting of target temperatures and generates a heating profile that reflects the set target temperatures while displaying the evaluations of the smoke tastes set in the N-th customization process.

As illustrated in Fig. 6, the design screen 400 includes the design information display field 30 and a temperature setting field 80. The design information display field 30 is as described above with reference to Fig. 5. The evaluation display field 40, however, indicates the evaluations of the smoke tastes set in the N-th customization process, that is, the evaluations of the smoke tastes set in the heating session that has just ended. The temperature setting field 80 is a field for receiving setting of target temperatures. The temperature setting field 80 includes the evaluation display field 40 and the temperature display field 50. What is displayed in these fields is as described above with reference to Fig. 5.

The terminal device 200 displays, in the temperature setting field 80, the icons 42, 44, and 46 indicating the evaluations of the smoke tastes and the icons 52 indicating the target temperatures set for a subset of all the puff times. In particular, the terminal device 200 enlarges and displays, in the temperature setting field 80, a part of the design information display field 30 included in a focus window 81. In the example illustrated in Fig. 6, the focus window 81 includes the twelfth to sixteenth puff times in the design information display field 30. The temperature setting field 80, therefore, shows the icons 42, 44, and 46 (e.g., 42-12, 44-12, and 46-12) indicating the evaluations of the smoke tastes and the icons 52 (e.g., 52-12) indicating the target temperatures set for the twelfth to sixteenth puff times. The user can enlarge and display information at any puff times in the temperature setting field 80 by moving the focus window 81 left and right.

The terminal device 200 receives setting of target temperatures on the basis of user operations performed in the temperature setting field 80. In particular, the terminal device 200 sets target temperatures in accordance with positions of the icons 52 indicating the target temperatures in the temperature setting field 80. That is, the terminal device 200 receives operations for moving the icons 52 up and down in the temperature setting field 80. The terminal device 200 then sets the target temperatures in accordance with gradations on which the moved icons 52 are located. The terminal device 200 can start to display the design screen 400 in the N-th customization process by arranging the icons 52 at positions corresponding to the target temperatures set in the (N - 1)th customization process. The operations for moving the icons 52 up and down in the temperature setting field 80, therefore, correspond to operations for changing the target temperatures set in the (N - 1)th customization process. After the operations for moving the icons 52 up and down are received, the temperature display field 50 shows the target temperatures set in the N-th customization process. When user operations for changing the positions of the icons 52 in the temperature setting field 80 are performed, the terminal device 200 changes the positions of the icons 52 in not only the temperature setting field 80 but also the design information display field 30.

The terminal device 200 receives setting of a target temperature at each of a plurality of puff times. The terminal device 200 receives a user operation for moving up and down the icon 52 indicating the target temperature at each of the plurality of puff times in the temperature setting field 80 as setting of the target temperature at the puff time. With this configuration, a heating temperature at a puff time that can greatly affect a smoke taste can be changed as intended by the user. It can be seen from comparison between the temperature display field 50 illustrated in Fig. 5 before the customization and the temperature display field 50 illustrated in Fig. 6 after the customization that target temperatures at the fifteenth and sixteenth puff times have been changed in the N-th customization process. More specifically, the target temperature at the fifteenth puff time has been changed from the temperature 15°C higher than the reference temperature to the reference temperature. The target temperature at the sixteenth puff time has been changed from the temperature 15°C higher than the reference temperature to the reference temperature.

The terminal device 200 may display the icons 52 indicating the target temperatures set in the N-th customization process and the icons 52 indicating the target temperatures set in the (N - 1)th customization process in different modes. That is, the terminal device 200 may display the icons 52 indicating the target temperatures changed in the N-th customization process and the icons 52 indicating the target temperatures that have not been changed from the (N - 1)th customization process in different modes. In the example illustrated in Fig. 5, an icon 52-12 indicating a target temperature at the twelfth puff time, which has not been changed from the (N - 1)th customization process, is displayed as a colorless diamond. Icons 52-15 and 52-16 indicating the target temperatures at the fifteenth and sixteenth puff times, which have been changed in the N-th customization process, are displayed as colored diamonds. With this configuration, the user can easily distinguish between target temperatures that have been changed in the N-th customization process and target temperatures that have not been changed in the N-th customization process. As another example of the display in different modes, a difference in color, a difference in color density, a difference in a degree of transparency, a difference in a contour line, or the like may be employed instead of presence or absence of color in Fig. 6.

The temperature setting field 80 includes an add button 82, which is an UI element (corresponds to a third UI element) for adding a gradation to the temperature display field 50. When the add button 82 is selected, the terminal device 200 enlarges a range within which the icons 52 indicating target temperatures can move. In an example, when the add button 82 is selected, the terminal device 200 adds a gradation at a top of the temperature display field 50 to increase a highest settable temperature. In the example illustrated in Fig. 6, for example, two gradations are provided above and below the reference line 51, and the temperatures 30°C higher and lower than the reference temperature are highest and lowest settable temperatures, respectively. When the add button 82 is selected in this state, the terminal device 200 may add, above the reference temperature 51, a third gradation corresponding to a temperature 45°C higher than the reference temperature. As a result, the icons 52 can move up to the third gradation above the reference line 51, that is, the temperature 45°C higher than the reference temperature can be set. Of course, the terminal device 200 may, when the add button 82 is selected, add a gradation at a bottom of the temperature display field 50 to decrease the lowest settable temperature, instead.

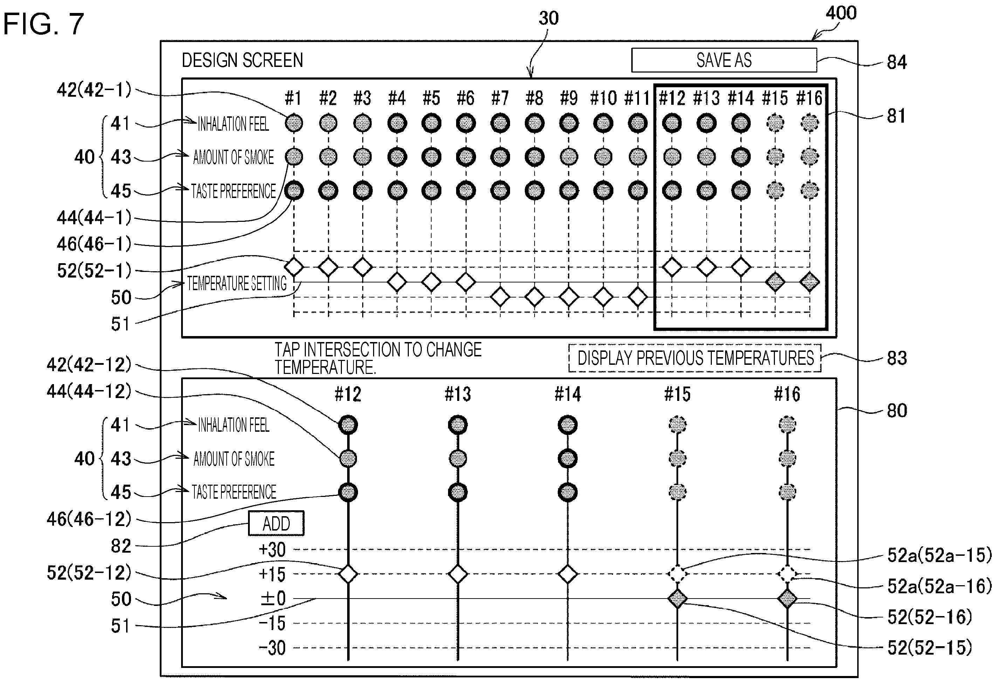

The design screen 400 includes a display previous temperatures button 83, which is a UI element for displaying target temperatures set in a previous customization process. When the display previous temperatures button 83 is selected, the terminal device 200 displays, in the temperature setting field 80, previous target temperatures at puff times at which the target temperatures have been changed in the N-th customization process. A display example when the display previous temperatures button 83 is selected in the example illustrated in Fig. 6 will be described with reference to Fig. 7.

Fig. 7 is a diagram illustrating a display example at a time when the display previous temperatures button 83 is pressed in the design screen 400 illustrated in Fig. 6. As illustrated in Fig. 7, the terminal device 200 displays, for the fifteenth and sixteenth puff times, at which the target temperatures have been changed in the N-th customization process, not only the icons 52 (52-15 and 52-16) indicating new temperatures but also icons 52a (52a-15 and 52a-16) indicating previous temperatures.

The terminal device 200 may thus display the icons 52a indicating the target temperatures set in the (N - 1)th customization process and the icons 52 indicating the target temperatures set in the N-th customization process. With this configuration, the user can easily understand how the target temperatures have been changed in the N-th customization process.

In particular, as illustrated in Fig. 7, the terminal device 200 may display, while the N-th customization process is being performed, the icons 52a indicating the target temperatures set in the (N - 1)th customization process and the icons 52 indicating the target temperatures set in the N-th customization process for specific puff times (first puff times). The specific puff times may be puff times at which the target temperatures have been changed in the N-th customization process as in the example illustrated in Fig. 7 or may be all the puff times. With this configuration, changes in the target temperatures for the specific puff times in the N-th customization process can be easily recognized.

Here, the terminal device 200 may display the icons 52 indicating the target temperatures set in the (N - 1)th customization process and the icons 52a indicating the target temperatures set in the N-th customization process in different modes. In the example illustrated in Fig. 7, the icons 52a indicating the target temperatures set in the (N - 1)th customization process are displayed as broken-line diamonds. The icons 52 indicating the target temperatures set in the N-th customization process, on the other hand, are displayed as solid-line diamonds. With this configuration, the user can easily distinguish between the target temperatures set in the N-th customization process and the target temperatures set in the (N - 1)th customization process.

As another example of the display in different modes, a difference in color, a difference in color density, a difference in a degree of transparency, a difference in a contour line, or the like may be employed instead of the difference in the contour line between a solid line and a broken line in Fig. 7. In particular, the terminal device 200 desirably displays the icons 52a indicating the target temperatures set in the (N - 1)th customization process with a higher level of transparency than for the icons 52 indicating the target temperatures set in the N-th customization process. For example, it is desirable to display the icons 52a indicating the target temperatures set in the (N - 1)th customization process translucently and the icons 52 indicating the target temperatures set in the N-th customization process opaquely. With this configuration, the user can more easily distinguish between the target temperatures set in the N-th customization process and the target temperatures set in the (N - 1)th customization process.

The design screen 400 includes a save button 84, which is a UI element for saving a heating profile that reflects set target temperatures. When the save button 84 is selected, the terminal device 200 saves a heating profile that reflects target temperatures set on the design screen 400. The terminal device 200 may save the heating profile while associating a name specified by the user with the heating profile.

Examples of the evaluation screen 300 and the design screen 400 have been described. In the case of an initial customization process (i.e., N = 1), default information is displayed as information regarding the (N - 1)th customization process.

### (3) Procedure of process

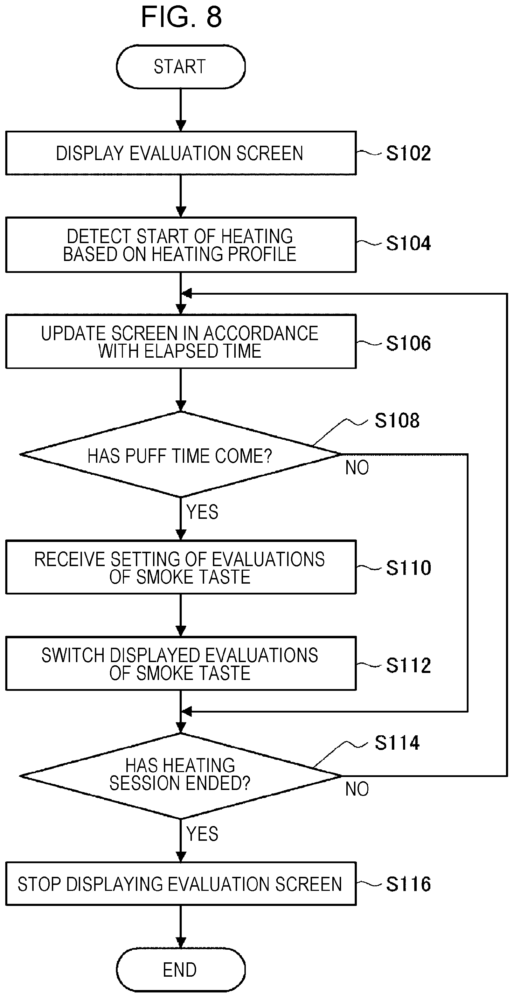

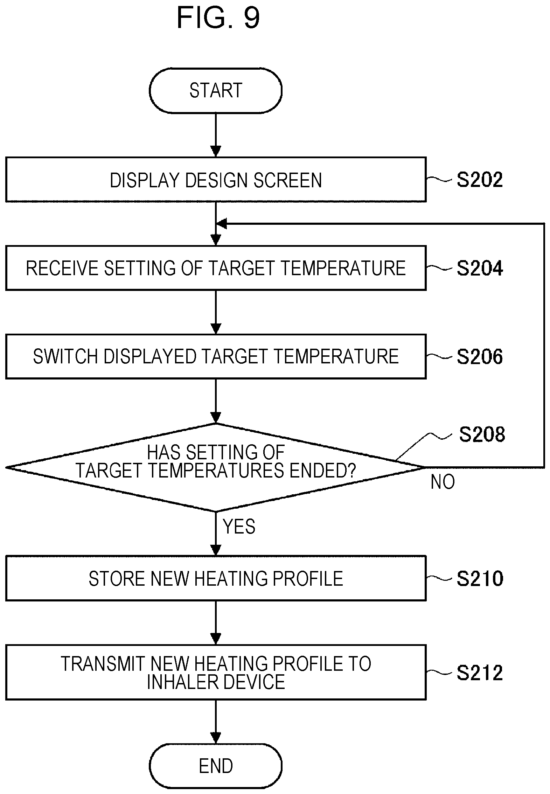

A procedure of a process performed by the terminal device 200 according to the present embodiment will be described hereinafter with reference to Figs. 8 and 9.

### - Process for setting evaluations

Fig. 8 is a flowchart illustrating an example of a procedure of a process for setting evaluations in the N-th customization process performed by the terminal device 200 according to the present embodiment. In the customization process, first, the process for setting evaluations is performed.

As illustrated in Fig. 8, first, the controller 260 generates the evaluation screen 300 and causes the touch panel that serves as both the inputter 210 and the outputter 220 to display the evaluation screen 300 (step S102). At this time, the controller 260 displays, in the evaluation screen 300, the icons 42, 44, and 46 indicating the evaluations of the smoke tastes set in the (N - 1)th customization process and the icons 52 indicating the target temperatures set in the (N - 1)th customization process.

Next, the controller 260 detects a start of heating based on a heating profile performed by the inhaler device 100 (step S104). In an example, the controller 260 detects a start of heating based on a heating profile on the basis of reception, by the communicator 240, of information indicating a start of heating from the inhaler device 100.

Next, the controller 260 updates the displayed evaluation screen 300 in accordance with elapsed time (step S106). For example, the controller 260 extends the progress bar in the bar display field 61 to the right and increases the number of puff times that have come in the fraction display field 62 in accordance with the elapsed time.

Next, the controller 260 determines whether a puff time has come (step S108). For example, the controller 260 determine whether a puff time has come on the basis of time elapsed since the start of the heating. If the controller 260 determines that a puff time has not come (step S108: NO), the process proceeds to step S114.

If the controller 260 determines that a puff time has come (step S108: YES), the controller 260 receives setting of evaluations of a smoke taste (step S110). For example, the controller 260 receives setting of evaluations relating to the inhalation feel, the amount of smoke, and the taste preference on the basis of touch operations in the evaluation setting field 70 displayed on the evaluation screen 300.

Next, the controller 260 switches how evaluations of a smoke taste are displayed on the evaluation screen 300 (step S112). For example, the controller 260 switches the icons 42, 44, and 46 indicating the evaluations of the smoke taste from the evaluations set in the (N - 1)th customization process to the evaluations set in step S108.

Next, the controller 260 determines whether the heating session has ended (step S114). For example, the controller 260 determines whether the heating session has ended on the basis of the time elapsed since the start of the heating or the number of puffs. If the controller 260 determines that the heating session has not ended (step S114: NO), the process returns to step S106.

If the controller 260 determines that the heating session has ended (step S114), the controller 260 stops displaying the evaluation screen 300 (step S116).

### - Process for setting target temperatures

Fig. 9 is a flowchart illustrating an example of a procedure of a process for setting target temperatures performed by the terminal device 200 according to the present embodiment. In the customization process, the process for setting target temperatures is performed after the process for setting evaluations.

As illustrated in Fig. 9, first, the controller 260 generates the design screen 400 and causes the touch panel that serves as both the inputter 210 and the outputter 220 to display the design screen 400 (step S202). At this time, the controller 260 displays the design screen 400 while arranging the icons 52 at positions corresponding to the target temperatures set in the (N - 1)th customization process.

Next, the controller 260 receives a user operation for setting a target temperature (step S204). For example, the controller 260 changes information displayed in the temperature setting field 80 as the focus window 81 moves. When one of the icons 52 displayed in the temperature setting field 80 is moved up or down, the controller 260 receives setting of a target temperature corresponding to a new position of the icon 52.

Next, the controller 260 switches how the target temperature is displayed (step S206). For example, the controller 260 moves a displayed position of the icon 52 in the design information display field 30 and the temperature setting field 80 in accordance with the user operation and switches a display mode of the moved icons 52 from colorless to colored.

Next, the controller 260 determines whether the setting of target temperatures has ended (step S208). For example, when the save button 84 is selected, the controller 260 determines that the setting of target temperatures has ended. If the controller 260 determines that the setting of target temperatures has not ended (step S208: NO), the process returns to step S204.

If the controller 260 determines that the setting of target temperatures has ended (step S208: YES), the controller 260 stores the new heating profile in the memory 250 (step S210). For example, the controller 260 stores, in the memory 250, a heating profile that reflects the target temperature set in step S206.

Next, the controller 260 controls the communicator 240 in such a way as to transmit the new heating profile to the inhaler device 100 (step S212). The inhaler device 100 stores the received heating profile and uses the heating profile for next heating. As a result, the inhaler device 100 performs, in an (N + 1)th customization process, heating based on the heating profile generated in the N-th customization process.

### <3. Modifications>

### (1) First modification

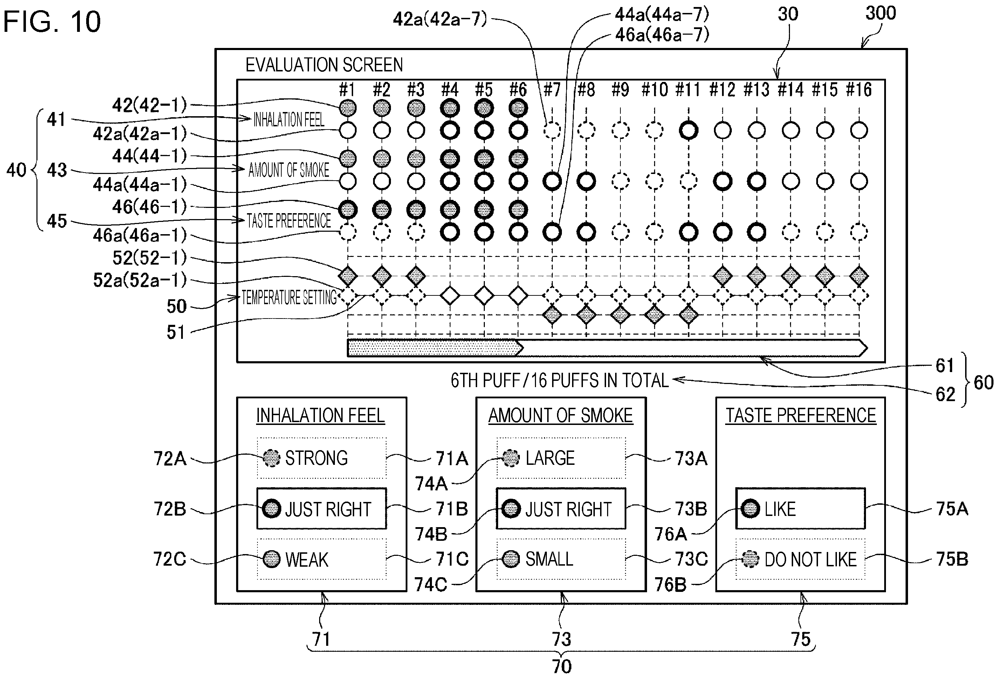

Fig. 10 is a diagram illustrating another example of the evaluation screen displayed in the N-th customization process. As in the example illustrated in Fig. 5, an evaluation screen 300 illustrated in Fig. 10 includes the design information display field 30, the progress display field 60, and the evaluation setting field 70. Differences from the example illustrated in Fig. 5 will be mainly described hereinafter.

As illustrated in Fig. 10, the evaluation display field 40 includes not only the icons 42, 44, and 46 indicating the evaluations of the smoke tastes set in the N-th customization process but also icons 42a, 44a, and 46a indicating the evaluations of the smoke tastes set in the (N - 1)th customization process. Among the icons 42a, 44a, and 46a, icons indicating the evaluations of the smoke taste set for each puff time might be identified by giving a number indicating the number of puff times to ends of reference numerals. For example, in the (N - 1)th customization process, icons 42a-1, 44a-1, and 46a-1 indicate evaluations for the inhalation feel, the amount of smoke, and the taste preference set for the first puff time.

In particular, for puff times at which evaluations of smoke tastes have been set in the N-th customization process, the terminal device 200 may display the icons 42, 44, and 46 indicating the evaluations of the smoke tastes set in the N-th customization process and the icons 42a, 44a, and 46a indicating the evaluations of the smoke tastes set in the (N - 1)th customization process. For puff times at which evaluations of smoke tastes have not been set in the N-th customization process, on the other hand, the terminal device 200 may display the icons 42a, 44a, and 46a indicating the evaluations of the smoke tastes set in the (N - 1)th customization process. In the example illustrated in Fig. 10, the setting of smoke tastes have been completed up to the sixth puff times in the N-th customization process. In the evaluation display field 40, therefore, the icons 42, 44, and 46 (e.g., 42-1, 44-1, and 46-1) and the icons 42a, 44a, and 46a (e.g., 42a-1, 44a-1, and 46a-1) indicating the evaluations set in the (N - 1)th customization process are displayed for up to the sixth puff times. For the seventh and subsequent puff times, on the other hand, the icons 42a, 44a, and 46a (e.g., 42a-7, 44a-7, and 46a-7) indicating the evaluations set in the (N - 1)th customization process are displayed in the evaluation display field 40. With this configuration, the user can easily view how the evaluations are changed as the setting of smoke tastes progresses.

The terminal device 200 may thus display the icons 42a indicating the evaluations of the smoke tastes set in the (N - 1)th customization process and the icons 42 indicating the evaluations of the smoke tastes set in the N-th customization process for specific puff times (second puff times) while the N-th customization process is being performed. The specific puff times may be puff times for which the setting of evaluations of smoke tastes has been completed as in the example illustrated in Fig. 10. With this configuration, changes in the evaluations in the N-th customization process for the specific puff times can be easily recognized.

As illustrated in Fig. 10, the temperature setting field 80 may display not only the icons 52 (e.g., 52-1) indicating the new temperatures but also the icons 52a (e.g., 52a-1) indicating the previous temperatures for puff times for which the target temperatures have been changed in the (N - 1)th customization process. Here, the icons 52 indicate the target temperatures set in the (N - 1)th customization process. The icons 52a indicates the target temperatures set in an (N - 2)th customization process.

The terminal device 200 may display the icons 52 indicating the target temperatures set in the (N - 1)th customization process and the icons 52a indicating the target temperatures set in the (N - 2)th customization process in different modes. In the example illustrated in Fig. 10, the icons 52a indicating the target temperatures set in the (N - 2)th customization process are displayed as broken-line diamonds. The icons 52 indicating the target temperatures set in the (N - 1)th customization process, on the other hand, are displayed as solid-line diamonds. With this configuration, the user can easily distinguish between the target temperatures set in the (N - 1)th customization process and the target temperatures set in the (N - 2)th customization process.

As another example of the display in different modes, presence or absence of color, a difference in color, a difference in color density, a difference in a degree of transparency, a difference in a contour line, or the like may be employed instead of the difference in the contour line between a solid line and a broken line in Fig. 10. In particular, the terminal device 200 desirably displays the icons 52a indicating the target temperatures set in the (N - 2)th customization process with a higher level of transparency than for the icons 52 indicating the target temperatures set in the (N - 1)th customization process. For example, it is desirable to display the icons 52a indicating the target temperatures set in the (N - 2)th customization process translucently and the icons 52 indicating the target temperatures set in the (N - 1)th customization process opaquely. With this configuration, the user can more easily distinguish between the target temperatures set in the (N - 1)th customization process and the target temperatures set in the (N - 2)th customization process.

### (2) Second modification

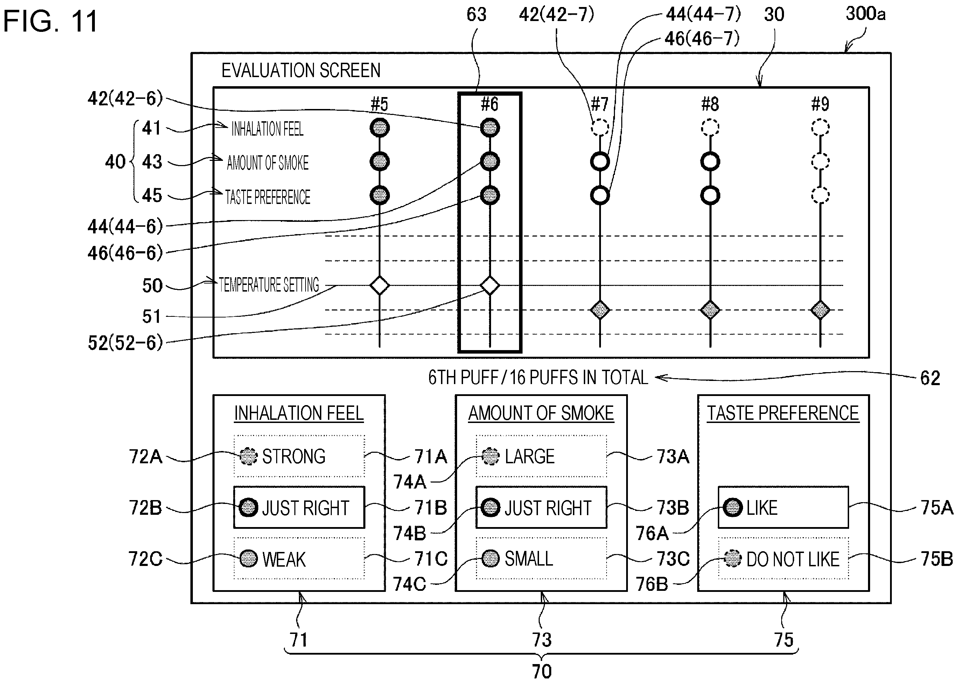

Figs. 11 to 13 are diagrams illustrating other example of the evaluation screen displayed in the N-th customization process. Evaluation screens 300 (300a, 300b, and 300c) illustrated in Figs. 11 to 13 indicate transition of the evaluation screen 300 over time. More specifically, as indicated by the fraction display field 62, the evaluation screen 300a is displayed at the sixth puff time, the evaluation screen 300b is displayed between the sixth puff time and the seventh puff time, and the evaluation screen 300c is displayed at the seventh puff time. As illustrated in Figs. 11 to 13, the evaluation screen 300 includes the design information display field 30, the fraction display field 62, and the evaluation setting field 70 as in the example illustrated in Fig. 5.

The terminal device 200 indicates progress of a heating session through scrolling through information displayed in the design information display field 30. The terminal device 200 displays information at some of the total of sixteen puff times in the design information display field 30. The terminal device 200 then scrolls through the information displayed in the design information display field 30 in a horizontal direction (an example of a predetermined direction), or more specifically, from the left to the right, as time passes. The terminal device 200 deletes information at puff times that have come at a left end of the design information display field 30 and newly displays information at puff times that will come at a right end of the design information display field 30.

More specifically, the design information display field 30 includes the icons 42, 44, and 46 indicating the evaluations of the smoke tastes as a plurality of second UI elements corresponding to a plurality of puff times and a plurality of evaluation items. Furthermore, the design information display field 30 includes the icons 52 indicating the target temperatures corresponding to the plurality of puff times. The terminal device 200 vertically arranges the icons 42, 44, 46, and 52 corresponding to the same puff time in a line, and scrolls the icons 42, 44, 46, and 52 from the right to the left at constant speed.

The design information display field 30 also includes a frame 63 as a predetermined area indicating setting timing of evaluations of a smoke taste. The frame 63 has a size with which the scrolled icons 42, 44, 46, and 52 can pass therethrough. The frame 63 is fixed at a position where the scrolled icons 42, 44, 46, and 52 pass therethrough.

The terminal device 200 arranges the icons 42, 44, 46, and 52 corresponding to a plurality of puff times in the horizontal direction, and scrolls the icons 42, 44, 46, and 52 in the horizontal direction (more specifically, from the right to the left). In particular, when a time (e.g., a puff time) at which evaluations of a smoke taste are to be set comes, the terminal device 200 scrolls the icons 42, 44, 46, and 52 from the right to the left as time passes such that the icons 42, 44, 46, and 52 corresponding to the puff time at which the evaluations of the smoke taste are to be set are located inside the frame 63. When the scrolled icons 42, 44, 46, and 52 reach the frame 63, the terminal device 200 then receives setting of the evaluations at the puff time corresponding to the icons 42, 44, 46, and 52, which have reached the frame 63.

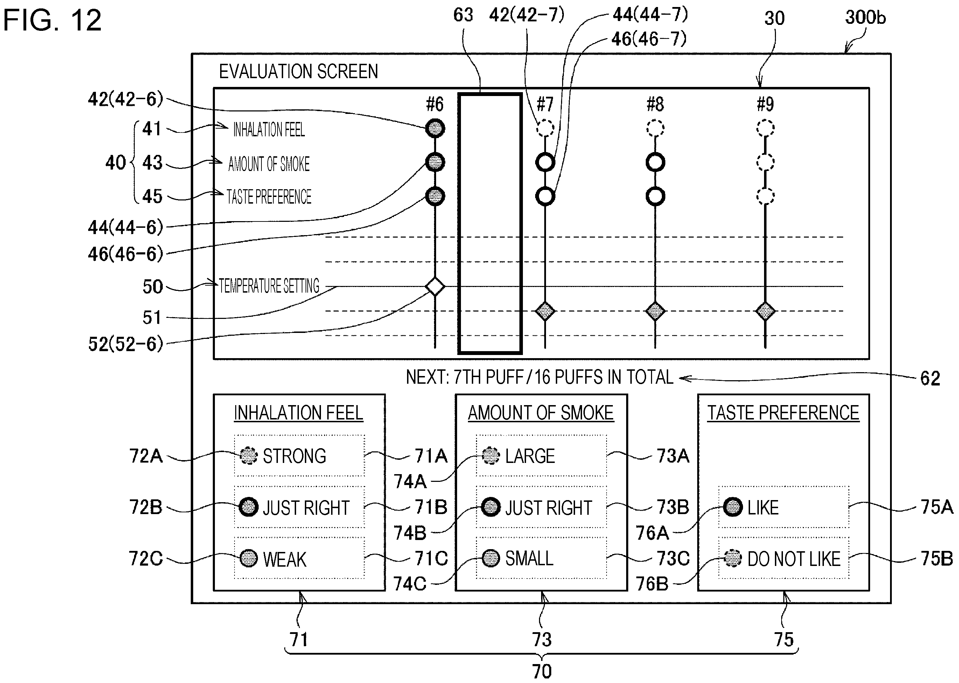

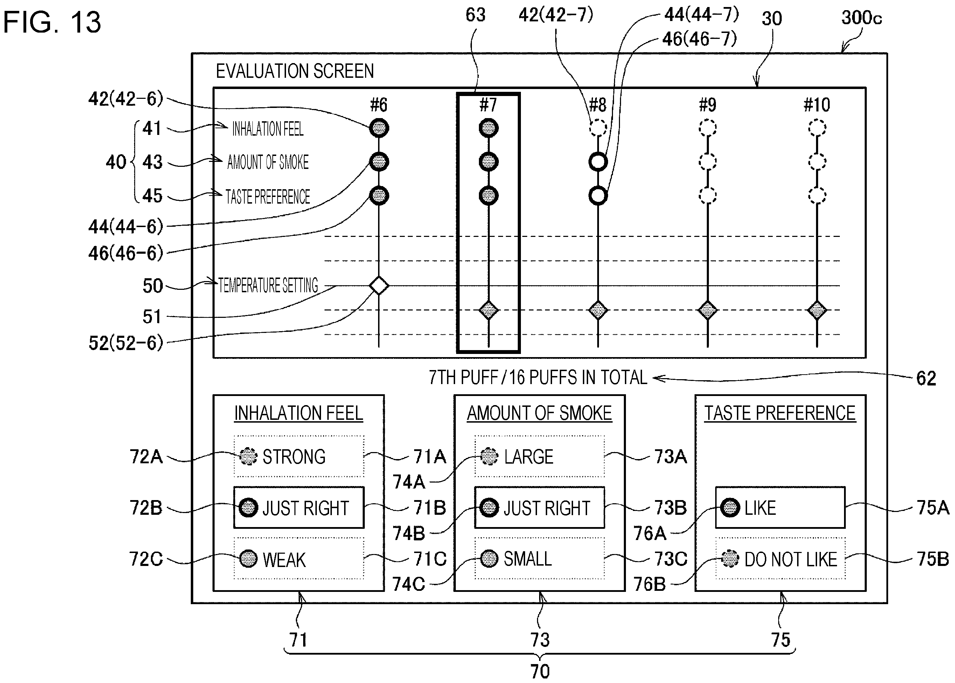

In the example illustrated in Fig. 11, the icons 42-6, 44-6, 46-6, and 52-6 are located inside the frame 63. The terminal device 200 then receives the evaluations of the smoke taste at the sixth puff time. In the example illustrated in Fig. 12, none of the icons 42, 44, 46, and 52 is located inside the frame 63. The terminal device 200, therefore, does not receive evaluations of a smoke taste. In the example illustrated in Fig. 13, on the other hand, the icons 42-7, 44-7, 46-7, and 52-7 are located inside the frame 63. The terminal device 200, therefore, receives evaluations of a smoke taste at the seventh puff time.

With the above-described configuration, the amount of information displayed in the design information display field 30 can be reduced, thereby improving visibility. Furthermore, the user can swiftly set the evaluation for the inhalation feel, the evaluation for the amount of smoke, and the evaluation for the taste preference in accordance with a time when the icons 42, 44, 46, and 52 reach the frame 63. As a result, the user can find entertainment in setting evaluations of smoke tastes and enjoy the setting.

Although Figs. 11 to 13 illustrate an example where the second UI elements are the icons 42, 44, and 46 indicating evaluations of smoke tastes, the present invention is not limited to this example. The second UI elements may be any symbols other than the icons 42, 44, and 46 indicating evaluations of smoke tastes, instead.

### (3) Third modification

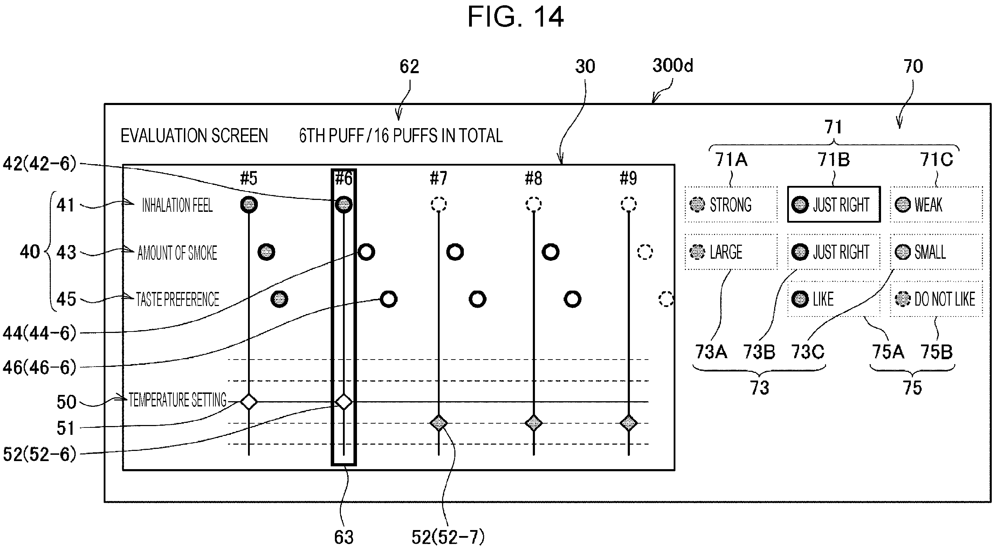

Figs. 14 to 16 are diagrams illustrating other examples of the evaluation screen displayed in the N-th customization process. Evaluation screens 300 (300d, 300e, and 300f) illustrated in Figs. 14 to 16 indicate transition of the evaluation screen 300 over time. These evaluation screen 300d, 300d, and 300f are sequentially displayed at the sixth puff time. The evaluation screen 300 according to the present modification indicates, as in the second modification, progress of a heating session through scrolling through information displayed in the design information display field 30.

The design information display field 30 includes the icons 42, 44, and 46 indicating the evaluations of the smoke tastes as a plurality of second UI elements corresponding to a plurality of puff times and a plurality of evaluation items. Furthermore, the design information display field 30 includes the icons 52 indicating the target temperatures corresponding to the plurality of puff times. The terminal device 200, however, vertically arranges the icon 42 and the icon 52 corresponding to the same puff time in a line, and obliquely arranges the icons 42, 44, and 46 corresponding to the same puff time. The terminal device 200 then scrolls the icons 42, 44, 46, and 52 from the right to the left at constant speed. As a result, the icons 42, 44, and 46 indicating the evaluations of the smoke tastes for various evaluation items sequentially reach the frame 63 one by one.

The design information display field 30 also includes a frame 63 as a predetermined area indicating setting timing of evaluations of a smoke taste. The frame 63 has a size with which the scrolled icons 42, 44, 46, and 52 can pass therethrough. The frame 63 is fixed at a position where the scrolled icons 42, 44, 46, and 52 pass therethrough.

The terminal device 200 arranges the icons 42, 44, 46, and 52 corresponding to a plurality of puff times in the horizontal direction, and scrolls the icons 42, 44, 46, and 52 in the horizontal direction (more specifically, from the right to the left). In particular, when a time (e.g., a puff time) at which evaluations of a smoke taste are to be set comes, the terminal device 200 scrolls the icons 42, 44, 46, and 52 from the right to the left as time passes such that the icons 42, 44, 46, and 52 corresponding to the puff time at which the evaluations of the smoke taste are to be set are located inside the frame 63. When the scrolled icons 42, 44, 46, and 52 reach the frame 63, the terminal device 200 then receives setting of the evaluations at the puff time corresponding to the icons 42, 44, 46, and 52, which have reached the frame 63.

The icons 42, 44, and 46 indicating the evaluations of the smoke taste corresponding to different evaluation items at the same puff time reach the frame 63 at different times. This is because the icons 42, 44, and 46 are scrolled in an obliquely arranged state. When the scrolled icon 42, 44, or 46 reaches the frame 63, the terminal device 200 receives setting of an evaluation of a smoke taste for a puff time and an evaluation item corresponding to the icon 42, 44, or 46 that has reached the frame 63.

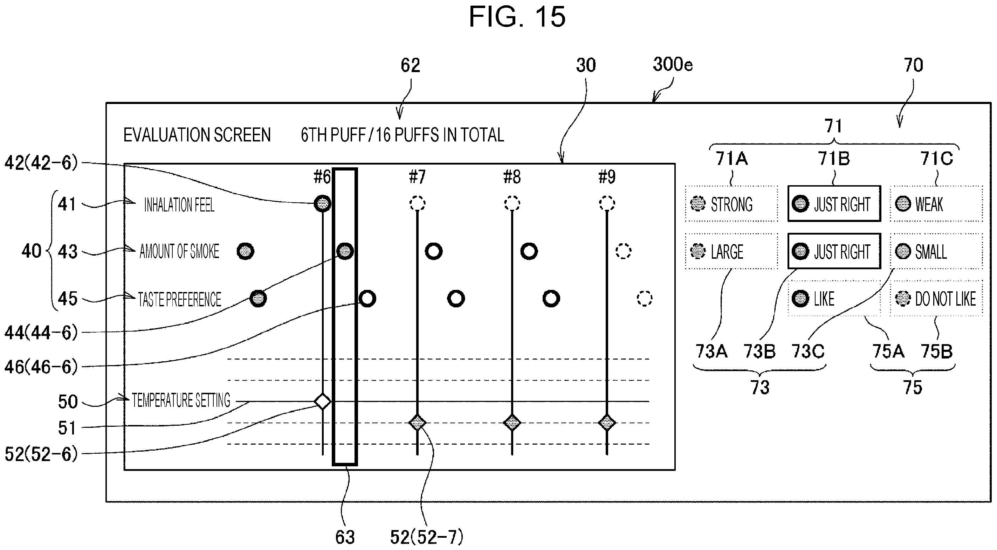

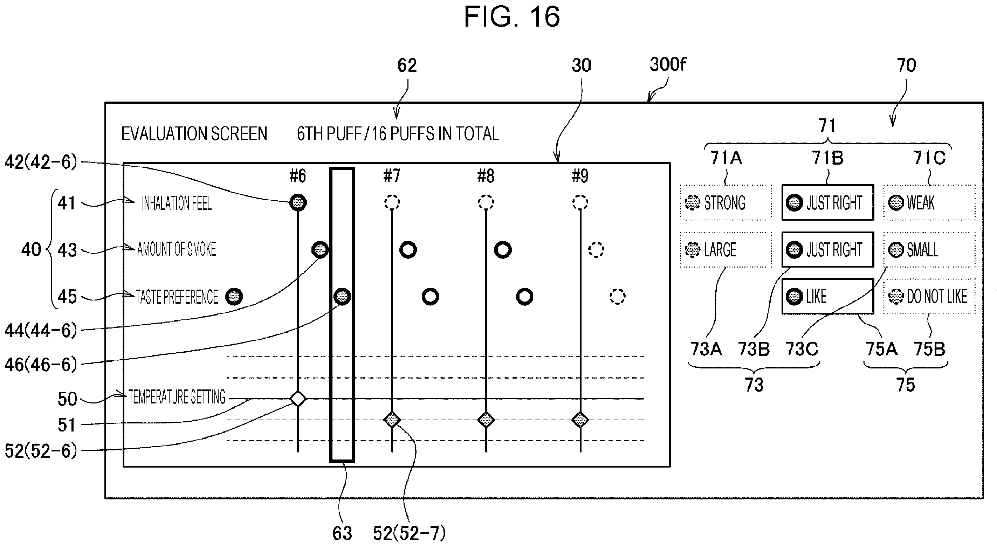

In the example illustrated in Fig. 14, the icon 42-6 indicating the evaluation for the inhalation feel at the sixth puff time is located inside the frame 63. The terminal device 200, therefore, receives setting of the evaluation for the inhalation feel at the sixth puff time. In the example illustrated in Fig. 15, the icon 44-6 indicating the evaluation for the amount of smoke at the sixth puff time is located inside the frame 63. The terminal device 200, therefore, receives setting of the evaluation for the amount of smoke at the sixth puff time. In the example illustrated in Fig. 16, the icon 46-6 indicating the evaluation for the taste preference at the sixth puff time is located inside the frame 63. The terminal device 200, therefore, receives setting of the evaluation for the taste preference at the sixth puff time.

With the above-described configuration, the user can sequentially and swiftly set the evaluation for the inhalation feel, the evaluation for the amount of smoke, and the evaluation for the taste preference one by one. As a result, the user can find more entertainment in setting evaluations of smoke tastes and enjoy the setting.

As illustrated in Figs. 14 to 16, the design screen 400 shows the icons 42, 44, or 46 indicating the set evaluations of the smoke tastes and the buttons 71A to 71C, 73A to 73C, or 75A and 75B for setting an evaluation for the same evaluation item as an evaluation item corresponding to the icons 42, 44, or 46 indicating the evaluations of the smoke tastes aligned in a horizontal direction (an example of a predetermined direction). More specifically, the design screen 400 shows the evaluation display field 41 for the inhalation feel and the evaluation setting field 71 for the inhalation feel aligned in the horizontal direction. The design screen 400 shows the evaluation display field 43 for the amount of smoke and the evaluation setting field 73 for the amount of smoke aligned in the horizontal direction. The design screen 400 shows the evaluation display field 45 for the taste preference and the evaluation setting field 75 for the taste preference aligned in the horizontal direction. With this configuration, the UI elements for each evaluation item are displayed aligned in the horizontal direction, which improves visibility.

### <4. Supplementary information>

Although a preferred embodiment of the present invention has been described in detail with reference to the accompanying drawings, the present invention is not limited to this example. It is clear that those who have ordinary knowledge in a technical field to which the present invention pertains can conceive various examples of alterations or modifications within the scope of the technical idea described in the claims, and it is understood that these also naturally belong to the technical scope of the present invention.

For example, although an example where evaluations of smoke tastes are set in parallel with progress of heating based on a heating profile has been described in the above embodiment, the present invention is not limited to this example. Evaluations of smoke tastes may be collectively set after an end of heating based on a heating profile, instead.

For example, although circle icons are illustrated as an example of symbols indicating evaluations of smoke tastes in the above embodiment, the present invention is not limited to this example. Any shape, letter, figure, or sign can be used as a symbol indicating an evaluation of a smoke taste. The same holds for symbols indicating target temperatures, which are diamond icons in the above embodiment.

It is to be noted that the process by each device described herein may be achieved by software, hardware, or a combination of software and hardware. A program constituting software is stored in advance, for example, in a storage medium (more specifically, a non-transitory computer-readable storage medium) provided inside or outside each device. When executed by a computer that controls each device described herein, for example, each program is loaded into a RAM and executed by a processing circuit such as CPU. The storage medium is, for example, a magnetic disk, an optical disc, a magneto-optical disk, a flash memory, or the like. In addition, the computer program may be distributed over a network, instead, without using a storage medium. In addition, the computer may be an integrated circuit for a specific application such as an ASIC, a general-purpose processor that executes a function by reading a software program, a computer on a server used for cloud computing, or the like. In addition, the process by each device described herein may be performed by a plurality of computers in a distributed manner.

In addition, the process described herein with reference to the flowchart and the sequence diagram need not necessarily be performed in the illustrated order. Some processing steps may be performed in parallel with each other, instead. Additional processing steps may also be employed, or some processing steps may be omitted.

The following configurations also belong to the technical scope of the present invention.
(1) An information processing device including:
   a controller that controls a customization process including
   generating a display image showing symbols indicating a parameter relating to heating temperature of an aerosol source, the parameter being included in control information that specifies the parameter, and symbols indicating evaluations of an aerosol generated by an inhaler device by heating an aerosol source on a basis of the control information and controlling a display device in such a way as to display the generated display image, and
   receiving setting of the parameter or setting of the evaluations of the aerosol generated on the basis of the control information that reflects the set parameter,
   in which the controller generates the display image showing at least symbols indicating the parameter set in a previous customization process and symbols indicating the parameter set in a current customization process or symbols indicating the evaluations set in the previous customization process and symbols indicating the evaluations set in the current customization process.
(2) The information processing device according to (1),
   in which the controller generates the display image showing the symbols indicating the parameter set in the previous customization process and the symbols indicating the parameter set in the current customization process in different modes or showing the symbols indicating the evaluations set in the previous customization process and the symbols indicating the evaluations set in the current customization process in different modes.
(3) The information processing device according to (2),
   in which the controller displays the symbols indicating the parameter or the symbols indicating the evaluations set in the previous customization process with a higher level of transparency than for the symbols indicating the parameter or the symbols indicating the evaluations set in the current customization process.
(4) The information processing device according to any of (1) to (3),
   in which the controller receives setting of the parameter or setting of the evaluations for each of a plurality of puff times.
(5) The information processing device according to (4),
   in which the controller generates the display image showing the symbol indicating the parameter set in the previous customization process and the symbol indicating the parameter set in the current customization process for a first puff time or showing the symbols indicating the evaluations set in the previous customization process and the symbols indicating the evaluations set in the current customization process for a second puff time.
(6) The information processing device according to (4) or (5),
   in which the controller generates the display image showing, for a puff time for which the evaluations have been set in the current customization process, the evaluations set in the current customization process and, for a puff time for which the evaluations have not been set in the current customization process, the evaluations set in the previous customization process.
(7) The information processing device according to any of (4) to (6),
   in which the display image shows the symbols indicating the set evaluations and a first UI element for setting the evaluation for a same evaluation item as an evaluation item corresponding to the symbols indicating the evaluations aligned in a predetermined direction.
(8) The information processing device according to any of (1) to (7),
   in which the display image shows the symbols indicating the evaluations and the symbols indicating the parameter set for a subset of all puff times.
(9) The information processing device according to any of (1) to (8),
   in which the display image includes a plurality of second UI elements corresponding to a plurality of puff times and a predetermined area, and
   in which the controller arranges the plurality of second UI elements corresponding to the plurality of puff times in a predetermined direction, scrolls the plurality of second UI elements in the predetermined direction, and receives, when each of the scrolled second UI elements reaches the predetermined area, setting of the evaluations for the puff time corresponding to the second UI element that has reached the predetermined area.
(10) The information processing device according to any of (1) to (8),
   in which the display image includes a plurality of second UI elements corresponding to a plurality of puff times and a plurality of evaluation items,
   in which the controller arranges the plurality of second UI elements corresponding to the plurality of puff times in a predetermined direction, scrolls the plurality of second UI elements in the predetermined direction, and receives, when each of the scrolled second UI elements reaches the predetermined area, setting of the evaluation for the puff time and the evaluation item corresponding to the second UI element that has reached the predetermined area, and
   in which a plurality of second UI elements corresponding to a same puff time and different evaluation items reaches the predetermined area at different times.
(11) The information processing device according to (9) or (10),
   in which the second UI elements include the symbols indicating the set evaluations.
(12) The information processing device according to any of (1) to (11),
   in which the display image includes a third UI element, and
   in which the controller sets the parameter in accordance with positions of the symbols indicating the parameter shown in the display image and, when the third UI element is selected, enlarges a movable range of the symbols indicating the parameter.
(13) The information processing device according to any of (1) to (12),
   in which the controller controls an output device in such a way as to output first information each time a puff time comes.
(14) The information processing device according to any of (1) to (13),
   in which, when all the set evaluations satisfy a predetermined condition, the controller controls an output device in such a way as to output second information.
(15) An information processing method including:
   controlling a customization process including
   generating a display image showing a parameter relating to heating temperature of an aerosol source, the parameter being included in control information that specifies the parameter, and evaluations of an aerosol generated by an inhaler device by heating an aerosol source on a basis of the control information and controlling a display device in such a way as to display the generated display image, and
   receiving setting of the parameter or setting of the evaluations of the aerosol generated on the basis of the control information that reflects the set parameter,
   in which the controlling the customization process includes generating the display image showing at least symbols indicating the parameter set in a previous customization process and symbols indicating the parameter set in a current customization process or symbols indicating the evaluations set in the previous customization process and symbols indicating the evaluations set in the current customization process.

### Reference Signs List

- 1: system
- 100: inhaler device
- 111: power supply
- 112: sensor
- 113: notifier
- 114: memory
- 115: communicator
- 116: controller
- 121: heater
- 140: container
- 141: internal space
- 142: opening
- 143: bottom
- 144: heat insulator
- 150: stick substrate
- 151: substrate
- 152: inhalation port
- 200: terminal device
- 210: inputter
- 220: outputter
- 230: detector
- 240: communicator
- 250: memory
- 260: controller

## Claims

1. An information processing device comprising:
a controller that controls a customization process including
generating a display image showing symbols indicating a parameter relating to heating temperature of an aerosol source, the parameter being included in control information that specifies the parameter, and symbols indicating evaluations of an aerosol generated by an inhaler device by heating an aerosol source on a basis of the control information and controlling a display device in such a way as to display the generated display image, and
receiving setting of the parameter or setting of the evaluations of the aerosol generated on the basis of the control information that reflects the set parameter,
wherein the controller generates the display image showing at least symbols indicating the parameter set in a previous customization process and symbols indicating the parameter set in a current customization process or symbols indicating the evaluations set in the previous customization process and symbols indicating the evaluations set in the current customization process.

2. The information processing device according to claim 1,
wherein the controller generates the display image showing the symbols indicating the parameter set in the previous customization process and the symbols indicating the parameter set in the current customization process in different modes or showing the symbols indicating the evaluations set in the previous customization process and the symbols indicating the evaluations set in the current customization process in different modes.

3. The information processing device according to claim 2,
wherein the controller displays the symbols indicating the parameter or the symbols indicating the evaluations set in the previous customization process with a higher level of transparency than for the symbols indicating the parameter or the symbols indicating the evaluations set in the current customization process.

4. The information processing device according to any of claims 1 to 3,
wherein the controller receives setting of the parameter or setting of the evaluations for each of a plurality of puff times.

5. The information processing device according to claim 4,
wherein the controller generates the display image showing the symbol indicating the parameter set in the previous customization process and the symbol indicating the parameter set in the current customization process for a first puff time or showing the symbols indicating the evaluations set in the previous customization process and the symbols indicating the evaluations set in the current customization process for a second puff time.

6. The information processing device according to claim 4 or 5,
wherein the controller generates the display image showing, for a puff time for which the evaluations have been set in the current customization process, the evaluations set in the current customization process and, for a puff time for which the evaluations have not been set in the current customization process, the evaluations set in the previous customization process.

7. The information processing device according to any of claims 4 to 6,
wherein the display image shows the symbols indicating the set evaluations and a first UI element for setting the evaluation for a same evaluation item as an evaluation item corresponding to the symbols indicating the evaluations aligned in a predetermined direction.

8. The information processing device according to any of claims 1 to 7,
wherein the display image shows the symbols indicating the evaluations and the symbols indicating the parameter set for a subset of all puff times.

9. The information processing device according to any of claims 1 to 8,
wherein the display image includes a plurality of second UI elements corresponding to a plurality of puff times and a predetermined area, and
wherein the controller arranges the plurality of second UI elements corresponding to the plurality of puff times in a predetermined direction, scrolls the plurality of second UI elements in the predetermined direction, and receives, when each of the scrolled second UI elements reaches the predetermined area, setting of the evaluations for the puff time corresponding to the second UI element that has reached the predetermined area.

10. The information processing device according to any of claims 1 to 8,
wherein the display image includes a plurality of second UI elements corresponding to a plurality of puff times and a plurality of evaluation items,
wherein the controller arranges the plurality of second UI elements corresponding to the plurality of puff times in a predetermined direction, scrolls the plurality of second UI elements in the predetermined direction, and receives, when each of the scrolled second UI elements reaches the predetermined area, setting of the evaluation for the puff time and the evaluation item corresponding to the second UI element that has reached the predetermined area, and
wherein a plurality of second UI elements corresponding to a same puff time and different evaluation items reaches the predetermined area at different times.

11. The information processing device according to claim 9 or 10,
wherein the second UI elements include the symbols indicating the set evaluations.

12. The information processing device according to any of claims 1 to 11,
wherein the display image includes a third UI element, and
wherein the controller sets the parameter in accordance with positions of the symbols indicating the parameter shown in the display image and, when the third UI element is selected, enlarges a movable range of the symbols indicating the parameter.

13. The information processing device according to any of claims 1 to 12,
wherein the controller controls an output device in such a way as to output first information each time a puff time comes.

14. The information processing device according to any of claims 1 to 13,
wherein, when all the set evaluations satisfy a predetermined condition, the controller controls an output device in such a way as to output second information.

15. An information processing method comprising:
controlling a customization process including
generating a display image showing a parameter relating to heating temperature of an aerosol source, the parameter being included in control information that specifies the parameter, and evaluations of an aerosol generated by an inhaler device by heating an aerosol source on a basis of the control information and controlling a display device in such a way as to display the generated display image, and
receiving setting of the parameter or setting of the evaluations of the aerosol generated on the basis of the control information that reflects the set parameter,
wherein the controlling the customization process includes generating the display image showing at least symbols indicating the parameter set in a previous customization process and symbols indicating the parameter set in a current customization process or symbols indicating the evaluations set in the previous customization process and symbols indicating the evaluations set in the current customization process.
